# FASCICULE DE BREVET EUROPEEN

(11) **EP 3 638 886 B1**
(45) Date de publication et mention de la délivrance du brevet: **06.01.2021**
(21) Numéro de dépôt: 18749416.6
(22) Date de dépôt: 04.06.2018
(51) Int. Cl.: F01D 11/24, F01D 25/14

(54) **DISPOSITIF DE REFROIDISSEMENT D'UN CARTER ANNULAIRE EXTERNE DE TURBINE**
KÜHLUNGSANORDNUNG FÜR EIN RINGFORMIGES AUSSENGEHÄUSE EINER TURBINE
COOLING DEVICE FOR AN ANNULAR EXTERNAL CASING OF A TURBINE

(30) Priorité: 15.06.2017 FR 1755411
(43) Date de publication de la demande: 22.04.2020
(73) Titulaire: Safran Aircraft Engines, 75015 Paris (FR)
(72) Inventeur: GENILIER, Arnaud, Lasantha, 77550 Moissy-Cramayel (FR); COMTE, Francois, Pierre, Michel, 77550 Moissy-Cramayel (FR); GARNIER, Fabien, Stéphane, 77550 Moissy-Cramayel (FR); MILLIER, Vincent, Francois, Georges, 77550 Moissy-Cramayel (FR)
(74) Mandataire: Ernest Gutmann - Yves Plasseraud S.A.S.
(86) Numéro de dépôt international: PCT/FR2018/051284
(87) Numéro de publication internationale: WO 2018/229385

(56) Documents cités:
- EP-A1- 1 505 261
- EP-A2- 2 236 772
- FR-A1- 2 766 232
- GB-A- 2 217 788
- US-A1- 2008 166 221

## Description

### DOMAINE

La présente invention concerne un dispositif de refroidissement de carter annulaire externe de turbine.

### CONTEXTE

Le domaine d'application est notamment celui des moteurs aéronautiques, tels que des turboréacteurs ou des turbopropulseurs d'avion. L'invention est toutefois applicable à d'autres turbomachines, par exemple des turbines industrielles.

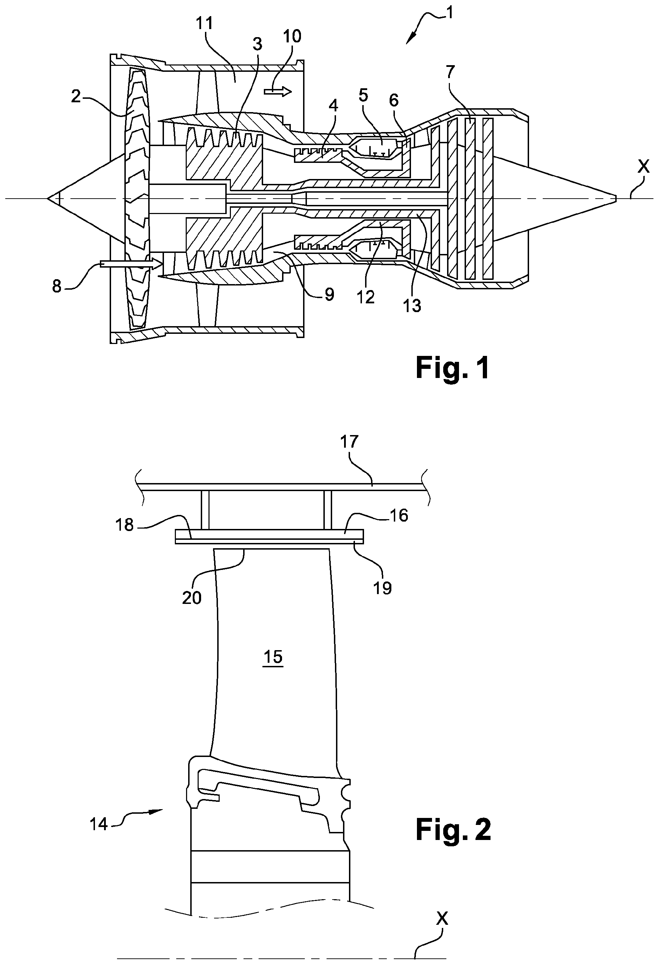

La figure 1 représente une turbomachine 1 à double flux et à double corps. L'axe longitudinal de la turbomachine est référencé X et correspond à l'axe de rotation des parties tournantes. Dans ce qui suit, les termes axial et radial sont définis par rapport à l'axe X.

La turbomachine 1 comporte, de l'amont vers l'aval dans le sens d'écoulement des gaz, une soufflante 2, un compresseur basse pression 3, un compresseur haute pression 4, une chambre de combustion 5, une turbine haute pression 6 et une turbine basse pression 7.

L'air issu de la soufflante 2 est divisé en un flux primaire 8 s'écoulant dans une veine annulaire primaire 9, et un flux secondaire 10 s'écoulant dans une veine annulaire secondaire 11 entourant la veine annulaire primaire 10.

Le compresseur basse pression 3, le compresseur haute pression 4, la chambre de combustion 5, la turbine haute pression 6 et la turbine basse pression 7 sont ménagés dans la veine primaire 9.

Le rotor de la turbine haute pression 6 et le rotor du compresseur haute pression 4 sont couplés en rotation par l'intermédiaire d'un premier arbre 12 de manière à former un corps haute pression.

Le rotor de la turbine basse pression 7 et le rotor du compresseur basse pression 3 sont couplés en rotation par l'intermédiaire d'un second arbre 13 de manière à former un corps basse pression, la soufflante 2 pouvant être reliée directement au rotor du compresseur basse pression 3 ou bien par l'intermédiaire d'un train d'engrenage épicycloïdal par exemple.

Classiquement, comme représenté à la figure 2, le rotor de la turbine 6, 7 (basse pression ou haute pression) comprend une pluralité de roues 14 à aubes 15 entourées par un anneau 16 de turbine délimitant extérieurement la veine d'écoulement des gaz. Chaque anneau 16 est généralement réalisé en un alliage métallique, par exemple un alliage à base de Nickel, et est fixé à un carter annulaire externe 17 de turbine qui s'étend suivant l'axe longitudinal X, directement ou par l'intermédiaire d'une entretoise par exemple.

La surface radialement interne 18 de l'anneau 16 peut comporter un revêtement abradable 19 destinée à limiter la circulation d'air parasite entre l'extrémité radialement externe 20 des aubes 15 et l'anneau 16. L'anneau 16 assure, en outre, une fonction de reconstitution de la veine supérieure et évite ainsi toute réintroduction de l'air chaud vers le carter 17.

En fonctionnement, la chaleur des gaz circulant dans la turbine entraîne une dilatation des éléments de la turbine et notamment du carter annulaire externe 17. L'anneau 16, qui est fixé au carter annulaire externe 17, est alors également dilaté, ce qui a pour conséquence d'écarter radialement le revêtement abradable 19 de l'extrémité radialement externe des aubes, ce qui nuit aux performances de la turbomachine 1.

Il est alors nécessaire de contrôler la dilatation du carter annulaire externe 17 pour limiter la circulation d'air parasite entre l'extrémité radialement externe 20 des aubes 15 et l'anneau 16.

Le document FR 2 766 232 décrit un dispositif de refroidissement d'un carter annulaire de turbine.

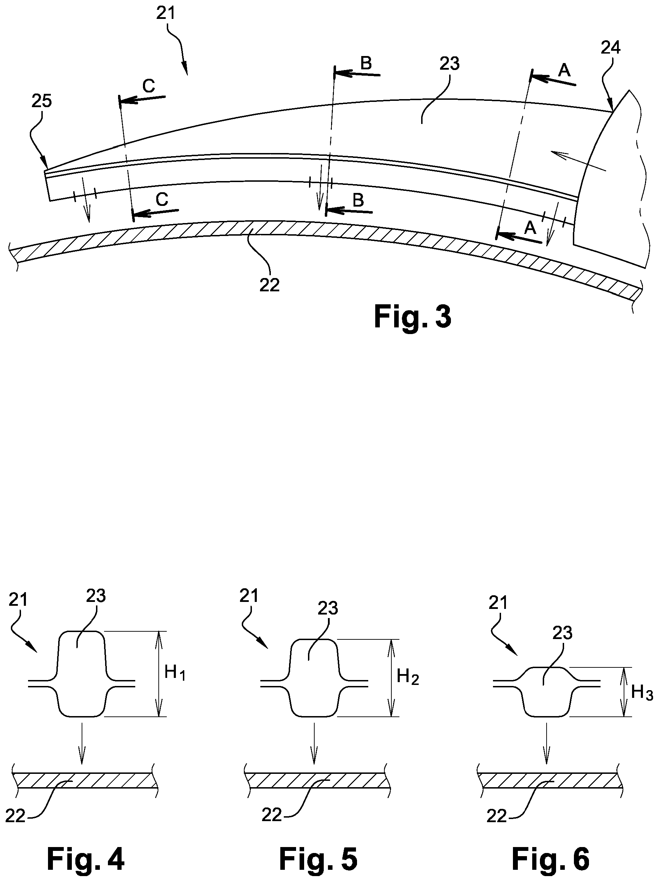

Le document US 2008/0166221 décrit également un dispositif de refroidissement 21 d'un carter annulaire externe 22 d'une turbine. Ce dispositif 21, illustré aux figures 3 et 4 à 6, comprend des tubes 23 s'étendant circonférentiellement autour du carter externe 22. Le tube 23 présente une section se réduisant depuis une première extrémité 24 d'alimentation en air frais du tube 23, vers une seconde extrémité 25 circonférentiellement opposée.

Les figures 4 à 6 représentent diverses sections du tube du dispositif de l'art antérieur selon les plans de section A-A, B-B et C-C de la figure 3, respectivement. On note sur ces figures, que la dimension d'extension radiale H1 du tube 23 en section A-A, à proximité de la première extrémité 24, est sensiblement égale à la dimension d'extension radiale H2 en section B-B et supérieure à la dimension d'extension radiale H3 de la section C-C, à proximité de la seconde extrémité 25.

En fonctionnement, l'air circulant dans chaque tube 23 est chauffé progressivement par le rayonnement du carter 22 depuis l'entrée 24 du tube 23 jusqu'à l'extrémité opposée 25 du tube 23 de sorte qu'il est difficile de réaliser un refroidissement homogène sur toute la circonférence du carter externe 22. En effet, l'air est plus froid à proximité de l'entrée 24 d'air du tube 23 puisque l'air dans cette zone provient directement de l'entrée d'air, par conséquent, le refroidissement du carter 22 est plus efficace dans cette zone. A l'inverse, l'air est plus chaud dans la zone circonférentielle éloignée de l'entrée d'air 24, le refroidissement du carter 22 est moins efficace dans cette zone.

D'autres dispositifs de refroidissement sont connus des documents GB 2 217 788, EP 2 236 772 et EP 1 505 261.

L'invention vise à remédier à ces inconvénients de façon simple, efficace et peu coûteuse.

### RESUME DE L'INVENTION

A cet effet, l'invention propose un dispositif de refroidissement d'un carter annulaire externe de turbine, le dispositif comprenant au moins un tube s'étendant circonférentiellement autour du carter annulaire externe et présentant une entrée d'air, destiné à l'acheminement d'air de refroidissement, ledit tube comportant une paroi radialement interne pourvue d'orifices d'éjection d'air de refroidissement et une paroi radialement externe disposées axialement en regard l'une de l'autre, un collecteur d'entrée d'air, l'entrée du tube débouchant dans ledit collecteur, caractérisé en ce que le tube comprend au moins une paroi intermédiaire s'étendant sur une portion circonférentielle du tube depuis l'entrée d'air, la paroi intermédiaire étant située radialement entre la paroi radialement interne et la paroi radialement externe, la paroi radialement interne et la paroi intermédiaire formant un premier conduit d'acheminement d'air, la paroi radialement externe et la paroi intermédiaire formant un second conduit d'acheminement d'air s'étendant circonférentiellement au-delà du premier conduit d'acheminement d'air, par rapport à l'entrée d'air.

Ainsi, en fonctionnement, de l'air de refroidissement, issu par exemple d'un compresseur d'une turbomachine, est acheminé à la fois par le premier conduit et par le second conduit avant d'être éjecté par les orifices correspondants, situés en regard du carter à refroidir. L'air de refroidissement circulant dans chacun des conduits est progressivement réchauffé au fur et à mesure qu'il traverse le conduit correspondant. L'air de refroidissement situé dans le second conduit est protégé d'un tel échauffement par la présence du premier conduit situé radialement à l'intérieur du second conduit, c'est-à-dire radialement entre le second conduit et le carter à refroidir.

De cette manière, sur une première plage angulaire comprise par exemple entre 0 et 45 ° à partir de l'entrée d'air, l'air de refroidissement est issu du premier conduit, et sur une seconde plage angulaire comprise par exemple entre 45 et 90°, l'air de refroidissement est issu du second conduit. Sur la première plage angulaire, l'échauffement de l'air de refroidissement circulant dans le second conduit est empêché par la présence du premier conduit qui forme un volume isolant.

La paroi intermédiaire peut s'étendre circonférentiellement sur un angle compris entre 0 et 45°, à partir de l'entrée d'air, les parois radialement interne et externe pouvant s'étendre chacune selon un angle compris entre 0 et 90°, à partir de l'entrée d'air.

L'entrée d'air peut être formée par l'une des extrémités du tube. L'entrée d'air peut déboucher dans un collecteur, par exemple.

La section du tube peut diminuer avec la position circonférentielle par rapport à l'entrée d'air.

On limite ainsi la dimension radiale du dispositif de refroidissement en fonction de sa circonférence. On notera que le premier conduit n'est présent que sur une portion du tube située du côté de l'entrée d'air. Il est donc aisé de réduire la section du tube à l'opposé de l'entrée d'air.

La section du tube et des conduits peut être carrée ou rectangulaire.

Les conduits peuvent être formés avec le tube par fabrication additive afin de faciliter leur réalisation.

Le dispositif peut comprendre un collecteur d'entrée d'air, l'entrée du tube débouchant dans ledit collecteur.

Le collecteur peut comporter un orifice d'amené d'air, l'air débouchant dans ledit collecteur par ledit orifice d'amené d'air. Ledit orifice d'amené d'air peut être orienté radialement ou circonférentiellement.

De cette manière, l'air peut déboucher radialement dans le collecteur. En variante, l'air peut déboucher circonférentiellement ou tangentiellement dans le collecteur.

Le dispositif peut comprendre au moins deux tubes décalés axialement l'un par rapport à l'autre, l'entrée d'air de chaque tube débouchant dans ledit collecteur. Chaque entrée d'air peut être conçue de façon ce que l'air issu du collecteur entre circonférentiellement ou tangentiellement dans le tube correspondant.

Le dispositif peut comprendre au moins deux tubes s'étendant circonférentiellement à l'opposé l'un de l'autre, l'entrée d'air de chaque tube débouchant dans ledit collecteur.

L'invention concerne également un ensemble pour turbine, comportant un carter annulaire et un dispositif de refroidissement du type précité, situé radialement à l'extérieur du carter, les orifices d'éjection d'air étant orientés vers le carter.

L'invention concerne en outre une turbine pour turbomachine, comprenant un ensemble du type précité.

La turbine est par exemple une turbine basse pression.

Les tubes peuvent présenter des structures et des dimensions identiques.

Le dispositif peut comprendre des moyens de fixation permettant de fixer les tubes au carter.

### BREVE DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés :
- la figure 1 est une vue schématique en coupe d'une turbomachine ;
- la figure 2 est une vue schématique de détail en coupe d'une partie d'une turbine basse ou haute pression ;
- la figure 3 est une schématique d'un dispositif de refroidissement d'un carter annulaire externe de turbine selon l'art antérieur ;
- les figures 4 à 6 sont des vues en section d'un tube du dispositif, selon les plans A-A, B-B, C-C de la figure 3 ;
- la figure 7 est une vue en perspective de dessus d'un dispositif de refroidissement d'un carter annulaire externe turbine selon l'invention ;
- la figure 8 est une vue en coupe du dispositif de refroidissement selon l'invention,
- les figures 9 à 12 sont des vues en section d'un tube du dispositif, respectivement selon les plans A-A, B-B, C-C et D-D de la figure 8,
- la figure 13 est une vue correspondant à la figure 7, illustrant une variante de réalisation de l'invention.

### DESCRIPTION DETAILLEE

Dans la description détaillée, les éléments de la turbomachine 1 cités en référence aux figures 1 et 2 gardent les mêmes références numériques.

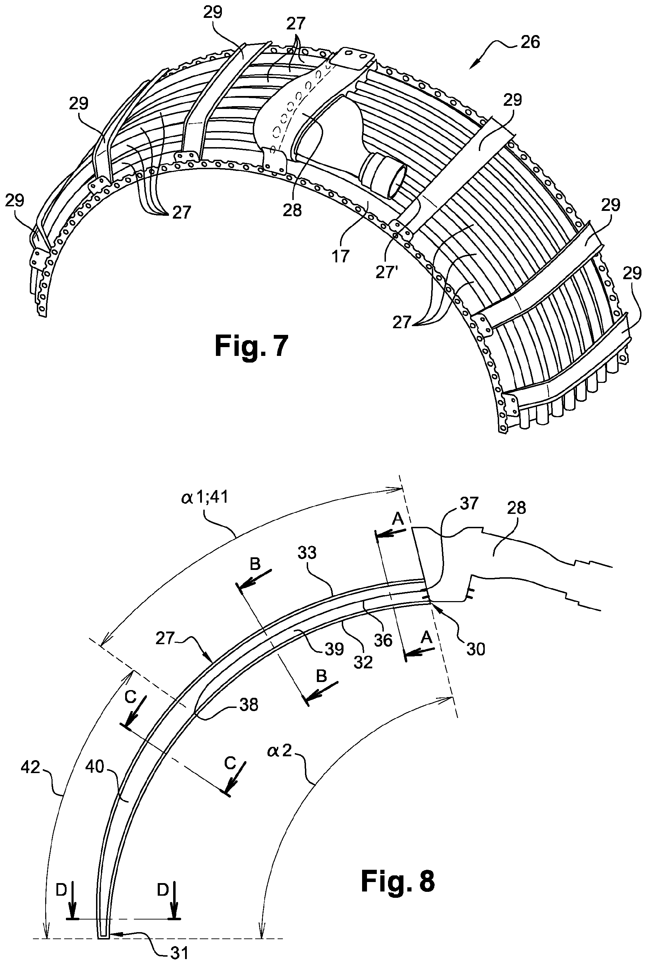

Les figures 7 à 12 illustrent un dispositif de refroidissement 26 d'un carter externe 17 selon une forme de réalisation de l'invention.

Le dispositif 26 comprend plusieurs tubes 27 s'étendant circonférentiellement et reliés les uns aux autres par un collecteur 28 d'entrée d'air de refroidissement. Le dispositif de refroidissement 26 est positionné radialement à l'extérieur du carter annulaire externe 17 de la turbine, ici une turbine basse pression 7.

L'air de refroidissement est par exemple prélevé en sortie du compresseur basse pression 3 ou du compresseur haute pression 4. L'air de refroidissement a une température relativement inférieure à la température des gaz d'échappement, issus de la chambre de combustion 5, qui traversent la turbine haute pression 6 et la turbine basse pression 7. La température de l'air de refroidissement est par exemple comprise entre 200 et 300 °C.

Les tubes 27, au nombre de seize dans l'exemple illustré, sont répartis en deux paires de huit tubes décalées axialement les uns des autres, le long de l'axe X. Les deux paires de tubes 27 s'étendent circonférentiellement à l'opposé l'une de l'autre, chacune d'un côté du collecteur 28 d'entrée d'air.

Les tubes 27 d'une même paire sont maintenus ensemble sur au moins un bras 29 s'étendant axialement, trois bras 29 dans la forme de réalisation illustrée. Chaque bras 29 est fixe par rapport au carter annulaire externe 17.

Chaque tube 27 comprend une première extrémité 30 formant une entrée d'air débouchant dans le collecteur 28 d'entrée d'air, et une seconde extrémité 31 circonférentiellement opposée à l'entrée d'air. Chaque tube 27 est fermé à sa seconde extrémité 31.

Chaque tube 27 comprend une paroi radialement interne 32, située en regard du carter annulaire externe 17, et une paroi radialement externe 33. Lesdites parois 32, 33 sont disposées axialement en regard l'une de l'autre. La paroi radialement interne 32 et la paroi radialement externe 33 sont reliées l'une à l'autre par deux parois latérales 34 s'étendant radialement.

La paroi radialement interne 32 est pourvue d'orifices d'éjection 35 permettant le passage d'air de refroidissement depuis l'intérieur du tube 27 concerné vers l'extérieur. Plus particulièrement, l'air de refroidissement est éjecté du tube 27 par les orifices d'éjection 35 en direction du carter annulaire externe 17, de manière à le refroidir.

Chaque tube 27 comprend en outre une paroi intermédiaire 36 s'étendant sur une portion circonférentielle du tube 27 depuis l'entrée d'air 30. La paroi intermédiaire 36 est située radialement entre la paroi radialement interne 32 et la paroi radialement externe 33. La paroi intermédiaire 36 présente une première extrémité 37 par laquelle elle est reliée au collecteur 28 d'entrée d'air, et une seconde extrémité 38 circonférentiellement distante de la première extrémité 37, la seconde extrémité 38 joignant la paroi radialement interne 32. La paroi intermédiaire 36 s'étend en outre entre les deux parois latérales 34.

Un premier conduit 39 d'acheminement d'air est délimité par la paroi radialement interne 32, la paroi intermédiaire 36 et les parois latérales 34. Un second conduit 40 d'acheminement d'air est délimité par la paroi radialement externe 33, la paroi intermédiaire 36 et les parois latérales 34.

Chaque conduit 39, 40 présente une section carrée ou rectangulaire.

Le premier conduit 39 et la paroi intermédiaire 36 s'étendent à partir de l'entrée d'air 30 sur un angle α1 pris dans un plan perpendiculaire à la direction axiale de la turbomachine compris entre 0 et 45 °.

Le second conduit 40 et le tube 27 s'étendent à partir de l'entrée d'air 30 sur un angle α2 pris dans un plan perpendiculaire à la direction axiale de la turbomachine compris entre 45 et 90 °.

On définit par première zone circonférentielle 41 la zone comprise entre l'entrée d'air 30 du tube 27 et la zone de jonction entre la paroi intermédiaire 36 et la paroi radialement interne 32, c'est-à-dire s'étendant entre 0° et α1.

On définit par seconde zone circonférentielle 42 la zone comprise entre la zone de jonction entre la paroi intermédiaire 36 et la paroi radialement interne 32 et la seconde extrémité 31 du tube 27, c'est-à-dire s'étendant entre α1 et α2.

Le second conduit 40 est situé radialement à l'extérieur du premier conduit 39 dans la première zone circonférentielle 41.

Comme représenté sur la figure 8, la section du second conduit 40 dans la seconde zone circonférentielle 42 diminue avec la position angulaire par rapport à l'entrée d'air 30. En d'autre termes, dans la seconde zone circonférentielle 42, la section du second conduit 40 est plus importante au niveau de l'angle α1 qu'au niveau de l'angle α2.

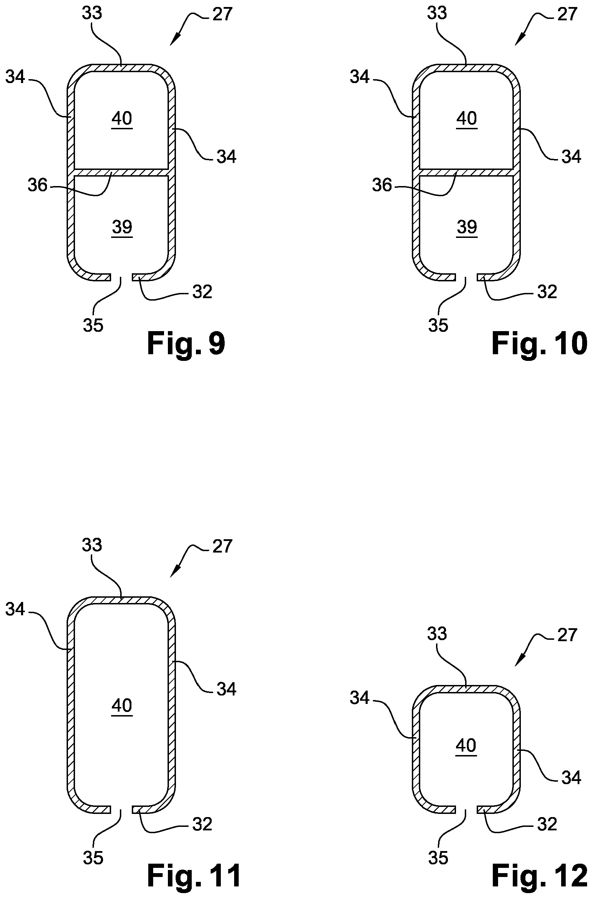

Les figures 9 à 12 illustrent des sections d'un tube 27 du dispositif de refroidissement 26, respectivement selon les plans A-A, B-B, C-C et D-D représentés à la figure 8.

Aux figures 9 à 11, les sections sont rectangulaires, les plus grands côtés des sections s'étendant radialement.

Les sections A-A et B-B, sur les figures 9 et 10 respectivement, illustrent les deux conduits 39, 40, chaque conduit 39, 40 ayant une section sensiblement carrée. La section C-C, sur la figure 11, située entre α1 et α2, ne correspond qu'au second conduit 40, le plan de section C-C étant situé plus près de l'angle α1 que de l'angle α2.

Enfin, à la figure 12, le tube 27 présente une section sensiblement carrée, le plan de section D-D étant situé entre α1 et α2, plus près de l'angle α2 que de l'angle α1.

En fonctionnement, l'air de refroidissement issu du collecteur 28 entre dans chaque tube 27 par son entrée d'air 30. L'air de refroidissement est alors acheminé dans chaque conduit 39, 40 de sorte à être éjecté des tubes 27 par les orifices d'éjection 35 de la paroi radialement inférieure 32. En particulier, dans cette forme de réalisation, l'air pénètre tangentiellement ou circonférentiellement dans le collecteur 28, par l'entrée 27', puis l'air du collecteur 28 entre tangentiellement ou circonférentiellement dans les tubes 27.

L'air éjecté par les orifices 35 vient alors impacter le carter annulaire externe 17 de la turbine basse pression 7 de sorte à le refroidir.

La présence du premier conduit 39 radialement à l'intérieur du second conduit 40 permet d'assurer une isolation thermique de l'air de refroidissement circulant dans la première zone circonférentielle 41 du second conduit 40.

Ainsi, l'air éjecté du tube 27 dans la seconde zone circonférentielle 42 conserve une température relativement faible, ce qui permet de réaliser un refroidissement homogène sur toute la circonférence du carter externe 17.

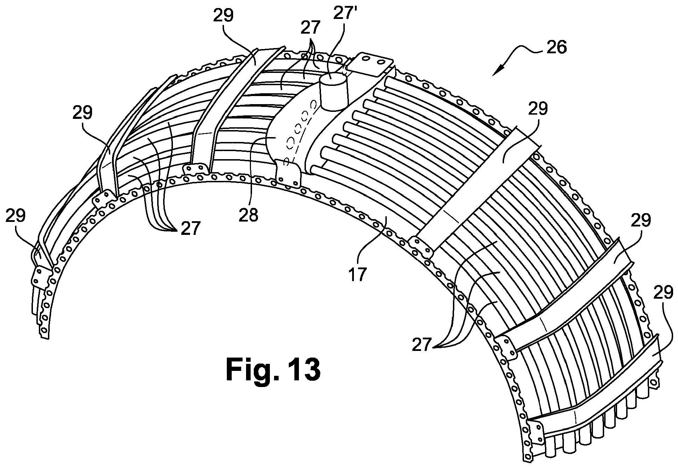

La figure 13 illustre une variante de réalisation qui diffère de celle exposée précédemment en ce que l'entrée d'air 27' du collecteur 28 est dirigée radialement de sorte que l'air pénètre radialement de l'extérieur vers l'intérieur dans le collecteur 28 avant d'entrée dans les tubes 27. Une telle forme de réalisation permet de limiter les pertes de charges au sein du collecteur. On améliore ainsi l'efficacité du refroidissement.

## Revendications

1. Dispositif de refroidissement (26) d'un carter annulaire externe (17) de turbine (7), le dispositif (26) comprenant au moins un tube (27) s'étendant circonférentiellement autour du carter annulaire externe (17) et présentant une entrée d'air (30), destinée à l'acheminement d'air de refroidissement, ledit tube (27) comportant une paroi radialement interne (32) pourvue d'orifices d'éjection (35) d'air de refroidissement et une paroi radialement externe (33) disposées axialement en regard l'une de l'autre, un collecteur (28) d'entrée d'air, l'entrée (30) du tube (27) débouchant dans ledit collecteur (28), **caractérisé en ce que** le tube (27) comprend au moins une paroi intermédiaire (36) s'étendant sur une portion circonférentielle du tube (27) depuis l'entrée d'air (30), la paroi intermédiaire (36) étant située radialement entre la paroi radialement interne (32) et la paroi radialement externe (33), la paroi radialement interne (32) et la paroi intermédiaire (36) formant un premier conduit (39) d'acheminement d'air, la paroi radialement externe (33) et la paroi intermédiaire (36) formant un second conduit (40) d'acheminement d'air s'étendant circonférentiellement au-delà du premier conduit (39) d'acheminement d'air, par rapport à l'entrée d'air (30).

2. Dispositif (26) selon la revendication 1, dans lequel la paroi intermédiaire (36) s'étend circonférentiellement sur un angle compris entre 0 et 45 °, à partir de l'entrée d'air (30), les parois radialement interne et externe (32,33) s'étendant chacune selon un angle compris entre 0 et 90 °, à partir de l'entrée d'air (30).

3. Dispositif (26) selon la revendication 1 ou 2, dans lequel la section du tube (27) diminue avec la position circonférentielle par rapport à l'entrée d'air (30).

4. Dispositif (26) selon l'une des revendications 1 à 3, dans lequel la section du tube (27) et des conduits (39, 40) est carrée ou rectangulaire.

5. Dispositif (26) selon l'une des revendications 1 à 4, **caractérisé en ce que** les conduits (39, 40) sont formés avec le tube (27) par fabrication additive.

6. Dispositif (26) selon l'une des revendications 1 à 5, dans lequel il comprend au moins deux tubes (27) décalés axialement l'un par rapport à l'autre, l'entrée d'air (30) de chaque tube (27) débouchant dans ledit collecteur (28).

7. Dispositif (26) selon la revendication 6, dans lequel il comprend au moins deux tubes (27) s'étendant circonférentiellement à l'opposé l'un de l'autre, l'entrée d'air (30) de chaque tube débouchant dans ledit collecteur (28).

8. Ensemble pour turbine (7), comportant un carter annulaire (17) et un dispositif de refroidissement (26) selon l'une des revendications 1 à 7, situé radialement à l'extérieur du carter (17), les orifices (35) d'éjection d'air étant orientés vers le carter (17).

9. Turbine (7) pour turbomachine, comprenant un ensemble selon la revendication 8.

## Patentansprüche

1. Vorrichtung (26) zum Abkühlen eines äußeren, ringförmigen Gehäuses (17) einer Turbine (7), wobei die Vorrichtung (26) zumindest ein Rohr (27) aufweist, das sich in Umfangsrichtung um das äußere, ringförmige Gehäuse (17) herum erstreckt und einen Lufteinlass (30) zum Führen von Kühlluft aufweist, wobei das Rohr (27) eine mit Kühlluftausstoßöffnungen (35) versehene, radial innere Wand (32) und eine radial äußere Wand (33), die axial einander gegenüberliegend angeordnet sind, und einen Lufteinlasssammelabschnitt (28) aufweist, wobei der Einlass (30) des Rohrs (27) in den Sammelabschnitt (28) mündet,
**dadurch gekennzeichnet, dass**
das Rohr (27) zumindest eine Zwischenwand (36) aufweist, die sich von dem Lufteinlass (30) über einen Umfangsabschnitt des Rohrs (27) erstreckt, wobei sich die Zwischenwand (36) radial zwischen der radial inneren Wand (32) und der radial äußeren Wand (33) befindet, wobei die radial innere Wand (32) und die Zwischenwand (36) einen ersten Luftführungskanal (39) bilden, wobei die radial äußere Wand (33) und die Zwischenwand (36) einen zweiten Luftführungskanal (40) bilden, der sich in Bezug auf den Lufteinlass (30) in Umfangsrichtung über den ersten Luftführungskanal (39) hinaus erstreckt.

2. Vorrichtung (26) nach Anspruch 1,
wobei sich die Zwischenwand (36) in Umfangsrichtung über einen Winkel zwischen 0 und 45° vom Lufteinlass (30) ausgehend erstreckt, wobei sich die radial innere und die radial äußere Wand (32, 33) jeweils in einem Winkel zwischen 0 und 90° vom Lufteinlass (30) ausgehend erstrecken.

3. Vorrichtung (26) nach Anspruch 1 oder 2,
wobei der Querschnitt des Rohrs (27) mit der Umfangsposition relativ zum Lufteinlass (30) abnimmt.

4. Vorrichtung (26) nach einem der Ansprüche 1 bis 3,
wobei der Querschnitt des Rohrs (27) und der Kanäle (39, 40) quadratisch oder rechteckig ist.

5. Vorrichtung (26) nach einem der Ansprüche 1 bis 4,
**dadurch gekennzeichnet, dass** die Kanäle (39, 40) mit dem Rohr (27) durch additive Herstellung gebildet sind.

6. Vorrichtung (26) nach einem der Ansprüche 1 bis 5,
wobei sie zumindest zwei axial zueinander versetzte Rohre (27) aufweist, wobei der Lufteinlass (30) jedes Rohres (27) in den genannten Sammelabschnitt (28) mündet.

7. Vorrichtung (26) nach Anspruch 6,
wobei sie zumindest zwei Rohre (27) aufweist, die sich in Umfangsrichtung entgegengesetzt zueinander erstrecken, wobei der Lufteinlass (30) jedes Rohrs in den Sammelabschnitt (28) mündet.

8. Anordnung für eine Turbine (7), enthaltend ein ringförmiges Gehäuse (17) und eine Kühlvorrichtung (26) nach einem der Ansprüche 1 bis 7, die radial außerhalb des Gehäuses (17) liegt, wobei die Luftausstoßöffnungen (35) auf das Gehäuse (17) gerichtet sind.

9. Turbine (7) für eine Turbomaschine bzw. ein Turbotriebwerk, enthaltend eine Anordnung nach Anspruch 8.

## Claims

1. A device (26) for cooling an annular outer turbine (7) casing (17), the device (26) comprising at least one tube (27) extending circumferentially around the annular outer casing (17) and having an air inlet (30) intended for conveying cooling air, said tube (27) having a radially inner wall (32) provided with cooling air discharge openings (35) and a radially outer wall (33) arranged axially opposite each other, an air inlet manifold (28), the inlet (30) of the tube (27) opening into said manifold (28), **characterized in that** the tube (27) comprises at least one intermediate wall (36) extending over a circumferential portion of the tube (27) from the air inlet (30), the intermediate wall (36) being located radially between the radially inner wall (32) and the radially outer wall (33), the radially inner wall (32) and the intermediate wall (36) forming a first air conveying duct (39), the radially outer wall (33) and the intermediate wall (36) forming a second air conveying duct (40) extending circumferentially beyond the first air conveying duct (39), relative to the air inlet (30).

2. A device (26) according to claim 1, wherein the intermediate wall (36) extends circumferentially over an angle between 0 and 45° from the air inlet (30), the radially inner and outer walls (32, 33) each extending at an angle between 0 and 90° from the air inlet (30).

3. A device (26) according to claim 1 or 2, wherein the cross-section of the tube (27) decreases with a circumferential position relative to the air inlet (30).

4. A device (26) according to one of claims 1 to 3, wherein the cross-section of the tube (27) and the ducts (39, 40) is square or rectangular.

5. A device (26) according to one of claims 1 to 4, **characterized in that** the ducts (39, 40) are additively manufactured with the tube (27).

6. A device (26) according to one of claims 1 to 5, wherein it comprises at least two tubes (27) axially offset from each other, the air inlet (30) of each tube (27) opening into said manifold (28).

7. A device (26) according to claim 6, wherein it comprises at least two tubes (27) extending circumferentially opposite each other, the air inlet (30) of each tube opening into said manifold (28).

8. A turbine assembly (7), comprising an annular casing (17) and a cooling device (26) according to one of claims 1 to 7, located radially outside the casing (17), the air discharge openings (35) being oriented towards the casing (17).

9. A turbine (7) for a turbomachine, comprising an assembly according to claim 8.
